# EUROPEAN PATENT SPECIFICATION

(11) **EP 1 448 067 B1**
(45) Date of publication and mention of the grant of the patent: **04.05.2005**
(21) Application number: 02788520.1
(22) Date of filing: 16.10.2002
(51) Int. Cl.: A23L 2/06, A23N 1/00, A23N 7/08, A23L 1/212

(54) **METHOD FOR EXTRACTING JUICE FROM FOOD PRODUCTS**
VERFAHREN ZUR EXTRAKTION VON SAFT AUS NAHRUNGSMITTELN
PROCEDE D'EXTRACTION DE JUS A PARTIR D'ALIMENTS

(30) Priority: 27.11.2001 IT PR20010085
(43) Date of publication of application: 25.08.2004
(73) Proprietor: SIG Manzini S.p.A., 43100 Parma (IT)
(72) Inventor: ARELLI, Pierluigi, I-43100 Parma (IT); PACIELLO, Gerardo, I-43100 Parma (IT)
(74) Representative: Gotra, Stefano
(86) International application number: PCT/IT2002/000665
(87) International publication number: WO 2003/045169

(56) References cited:
- EP-A- 0 292 046
- EP-A- 0 547 236
- EP-A- 0 888 718
- WO-A-00/13530
- GB-A- 367 105
- US-A- 2 045 856
- US-A- 3 366 489
- US-A- 5 298 275
- TRIFIRO A ET AL: "Quality changes in tomato concentrate production: effects of heat treatments." INDUSTRIA CONSERVE 73 (1) 30-41 1998 STA. SPERIMENTALE PER L'IND. DELLE CONSERVE ALIMENTARI, VIALE TANARA 31/A, 43100 PARMA, ITALY, XP008015199
- PACIELLO G: "Tomato paste production plants." FRUIT PROCESSING 12 (5) 168-172, 174 2001 SASIB PROCESSING SPA, 43100 PARMA, ITALY. E-MAIL MANZINI(A)SASIB-BEV.IT, XP008015200

## Description

### TECHNICAL FIELD AND BACKGROUND ART.

The present invention relates to a method for extracting juice from food products, in particular for clear and/or turbid fruit and/or vegetable juices, of the type comprising at least the phases of cold trituration of the product, extracting the product puree and extracting the juice from the puree.

Currently, the method for extracting juices or purees from food products generally comprise a first phase of washing and verifying the quality of the products, typically fruit and/or vegetables, and a subsequent phase of cold trituration of the product with simultaneous administration of anti-oxidising agents, preferably ascorbic acid. Thereafter, the triturated product is heated to inhibit the enzymatic activity that is responsible for chemical degradation (such as colour or viscosity changes). Subsequently, the triturated and heated product ends in a strainer or refiner which separates the puree and/or the juice from the scrap (peels, seeds, petioles, ...). The puree and the juice are then obtained by means of heat pressing and are subsequently pasteurised.

The method continues with the separation of the solid phases suspended in the juice, the concentration of the juice and final storage of the product thereby obtained.

A particularly acute problem in the sector of the production of food juices and/or purees pertains to the treatments required to inhibit the enzymatic activity that develops in the puree and/or in the juice following trituration and that is responsible for the chemical degradation of the product, such as colour and/or viscosity changes. In particular, the enzymes responsible for the change are known by the term of peroxidase, whilst those responsible for viscosity change are called polyesterase.

Currently, the inhibition of the enzymatic activity, operation technically called enzymatic deactivation, takes place by heating the triturated product at a product that varies according to the product and generally falls within a temperature range between 80 °C and 95 °C. The temperatures used must be sufficiently high to guarantee the deactivation of the most heat-resistant enzymes.

As regards the trituration phase, the prevention and/or reduction of the enzymatic activity responsible for the oxidation occurs by the administration of ascorbic acid.

The method briefly described above has some drawbacks.

First of all, ascorbic acid, if present in large quantities, can give rise to chemical degradation during the storage of the juice or of the puree, such as colour changes or separation of the solid phase from the liquid phase, especially in turbid juices.

In the second place, the enzymatic deactivation by heating the triturated product inevitably entails a worsening in the quality of the puree and/or of the juice.

Another drawback is represented by the fact that extraction, with heat, of the puree or of the juice by means of a strainer entails significant product wastage, since scrap, such as peels, seeds or petioles, are always associated to parts of pulp.

Studies and research work performed by the Applicant have shown that the concentration of the enzymes responsible for the chemical degradation of the product is considerably higher in scrap, in particular in peels and in seeds, than in the pulp. In particular, for the Golden apple the elimination without heating of peel, seeds and petioles allows to reduce by about eight times the activity of the peroxidase and to eliminate the most heat-resistant forms of polyesterase.

GB 367105 discloses a method for the production of citrus fruit concentrates wherein the trituration phase is followed by a separation of essential oil and seeds by means of a revolving screen.

### DISCLOSURE OF INVENTION.

The aim of the present invention is to eliminate the aforesaid drawbacks making available a method for extracting juice from food products, in particular for clear and/or turbid fruit and/or vegetable juices, which allows to reduce the enzymatic activity responsible for the chemical degradation of the puree and/or of the juice, such as colour and viscosity changes.

Another aim of the present invention is to propose a method for extracting juice that allows a pasteurisation at lower temperatures than those currently used in known processes, improving the quality of the product. In particular, an aim of the invention is also to obtain juices with fresh flavour and without aftertaste.

An additional aim of the present invention is to obtain a method that allows to obtain stable turbid juices, i.e. juices in which, during storage, there is no separation of the liquid phase from the solid phase.

Another aim of the present invention is to propose a method that allows to reduce the presence of pulp in the scraps.

Said aims are fully achieved by the method for extracting juice from food products, in particular for clear and/or turbid fruit and/or vegetable juices, of the present invention, that is characterised by the contents of the claims set out below and in particular in that it comprises, during the trituration phase, a phase of separating peels and/or seeds and/or other scraps from the pulp of the product, said trituration phase being simultaneous with the phase of extracting the product puree.

### BEST MODE FOR CARRYING OUT THE INVENTION.

These and other aims shall become more readily apparent from the detailed description that follows of a preferred embodiment illustrated, purely by way of non limiting example.

The method for extracting juice from food products of the present invention is of the type comprising at least the phase of triturating the product without heating, extracting the product puree and extracting the juice from the puree. The method originally comprises, during the trituration phase, a phase of separating peels and/or seeds and/or petioles and/or other scrap from the pulp of the product. In particular, said trituration phase is substantially simultaneous with the phase of extracting the product puree and preferably takes place inside a known turbo-extractor.

Subsequently to the trituration and puree extraction phases, the method comprises a phase of pasteurising the puree, in order to deactivate the enzymes responsible for the chemical degradation mentioned in the present description.

The pasteurisation phase takes place within a range of temperatures that varies according to the processed product, although, by effect of eliminating the peel, the seeds and the petioles, the temperatures used are lower by a few tens of degrees from those currently employed in processes according to the prior art. In particular, in the extraction of the apple juice, the complete enzymatic deactivation is achieved at a temperature lower by about 10°C - 15°C than the one required to deactivate the puree with the peel present.

The elimination of the peel, of the seeds and of the petioles allows considerably to reduce the enzymatic concentration, eliminating in particular the most heat-resistant enzymes.

The method of the invention further comprises a phase of administering at least anti-oxidising agent during the trituration phase. In the example described herein, said anti-oxidising agent is ascorbic acid that is administered in a quantity that generally does not exceed 500 milligrams for each kilogram of product processed.

The juice extraction phase comprises at least a decantation phase, during which the juice is separated from the solid puree.

The method further comprises a phase of removing solid particulate present in suspension in the juice, a phase of concentrating the juice and lastly a phase of sterilising the juice. In particular, the phase of removing the solid particulate is preferably accomplished by means of centrifuging.

The method of the invention achieves important advantages.

First of all, eliminating the peel and/or the seeds and/or the petioles during the cold trituration phase allows to reduce the quantity of ascorbic acid required to inhibit the oxidation of the puree. In this way, the juice obtained at the end of the method is more stable and does not tend to separate into liquid phase and solid phases, or to change colour. This is particularly appreciated in the manufacture of turbid juices.

Secondly, a pasteurisation carried out at temperatures lower by a few tens of degree than those commonly used in the prior art, in addition to allowing considerable energy savings, improves the quality of the product, since it reduce the heat stresses whereto the product is subjected. Moreover, since the puree is obtained without pressing the scraps, the extracted juice has a fresher flavour without aftertaste.

Advantageously, the elimination of peels, seeds and petioles without heating allows to reduce the presence of pulp in the scraps, with consequent economic savings.

## Claims

1. Method for extracting juice from food products from which puree can be extracted, in particular for clear and/or turbid fruit and/or vegetable juices, comprising at least the phases of:
cold trituration of the product;
extraction of the product puree;
extraction of the juice from the puree,
**characterised in that** it comprises, during the trituration phase, a phase of separating peel and/or seeds and/or other scraps from the pulp of the product, said trituration phase being substantially simultaneous with the phase of extracting the product puree.

2. Method as claimed in claim 1, **characterised in that** it comprises a phase of pasteurising the puree, subsequent to the phases of triturating and extracting the puree, to obtain enzymatic deactivation.

3. Method as claimed in claim 1, **characterised in that** it comprises a phase of administering at least an anti-oxidising phase during the trituration phase.

4. Method as claimed in claim 3, **characterised in that** said anti-oxidising agent is ascorbic acid.

5. Method as claimed in claim 4, **characterised in that** ascorbic acid is administered in quantities not exceeding 500 milligrams for each kilogram of product.

6. Method as claimed in claim 1, **characterised in that** said phase of extracting the juice comprises at least a phase of decanting the puree.

7. Method as claimed in claim 6, **characterised in that** it further comprises the phases of:
removing solid parts suspended in the juice;
concentrating the juice;
sterilising the juice.

8. Method as claimed in claim 7, **characterised in that** said of removing solid parts in suspension is accomplished by means of centrifuging.

## Patentansprüche

1. Verfahren zur Extraktion von Saft aus Nahrungsmitteln, aus denen Brei extrahierbar ist, insbesondere für klare bzw. trübe bzw. Frucht- und Gemüsesäfte, umfassend zumindest folgende Schritte:
Kaltmahlung des Produktes;
Extraktion des Produktbreis;
Extraktion von Saft aus dem Brei,
**dadurch gekennzeichnet, dass** während des Mahlvorgangs ein Arbeitsgang zur Trennung von Schale bzw. Samen bzw. anderen Abfallprodukten von dem Fruchtfleisch des Produktes vorgesehen ist, wobei der genannte Mahlvorgang im wesentlichen gleichzeitig mit der Extraktion des Produktbreis abläuft.

2. Verfahren nach Anspruch 1, **dadurch gekennzeichnet, dass** nach dem Mahl- und Extraktionsvorgang eine Pasteurisierung des Breis zur enzymatische Deaktivierung vorgesehen ist.

3. Verfahren nach Anspruch 1, **dadurch gekennzeichnet, dass** während des Mahlvorgangs die Zugabe von mindestens einem Antioxidationsmittel vorgesehen ist.

4. Verfahren nach Anspruch 3, **dadurch gekennzeichnet, dass** das genannte Antioxidationsmittel Askorbinsäure ist.

5. Verfahren nach Anspruch 4, **dadurch gekennzeichnet, dass** die Askorbinsäure in Mengen von unter 500 Milligramm pro Kilogramm Produktgewicht zugegeben wird.

6. Verfahren nach Anspruch 1, **dadurch gekennzeichnet, dass** der genannte Extraktionsvorgang von Saft zumindest ein Dekantieren des Breis umfasst.

7. Verfahren nach Anspruch 6, **gekennzeichnet durch** folgende weitere Schritte:
Entziehen von im Saft suspendierten festen Teilchen;
Konzentration des Saftes;
Sterilisation des Saftes.

8. Verfahren nach Anspruch 7, **dadurch gekennzeichnet, dass** das genannte Entziehen der suspendierten festen Teilchen durch Zentrifugieren erfolgt.

## Revendications

1. Procédé d'extraction de jus à partir d'aliments desquels il est possible d'extraire de la purée en particulier pour jus de fruits et/ou de légumes limpides et/ou troubles, comprenant au moins les phases de :
trituration à froid de l'aliment ;
extraction de la purée de l'aliment ;
extraction de jus de la purée,
**caractérisé en ce qu'**il comprend, pendant la phase de trituration, une phase de séparation des épluchures et/ou des pépins et/ou d'autres morceaux de la pulpe de l'aliment, la dite phase de trituration étant pour l'essentiel simultanée à la phase d'extraction de la purée d'aliment.

2. Procédé selon la revendication 1, **caractérisé en ce qu'**il comprend une phase de pasteurisation de la purée, suivant les phases de trituration et d'extraction de la purée pour obtenir la désactivation enzymatique.

3. Procédé selon la revendication 1, **caractérisé en ce qu'**il comprend une phase d'administration d'au moins un agent anti-oxydation pendant la phase de trituration.

4. Procédé selon la revendication 3, **caractérisé en ce que** le dit agent anti-oxydation est l'acide ascorbique.

5. Procédé selon la revendication 4, **caractérisé en ce que** l'acide ascorbique est administré en quantité non supérieure à 500 milligrammes par kilogramme d'aliment.

6. Procédé selon la revendication 1, **caractérisé en ce que** la dite phase d'extraction de jus comprend au moins une phase de décantation de la purée.

7. Procédé selon la revendication 6, **caractérisé en ce qu'**il comprend en outre les phases de :
retrait des parties solides en suspension dans le jus ;
concentration du jus ;
stérilisation du jus.

8. Procédé selon la revendication 7, **caractérisé en ce que** le dit retrait des parties solides en suspension dans le jus est effectué par centrifugation.
